# EUROPÄISCHE PATENTSCHRIFT

(11) **EP 1 620 661 B1**
(45) Veröffentlichungstag und Bekanntmachung des Hinweises auf die Patenterteilung: **27.07.2011**
(21) Anmeldenummer: 04729825.2
(22) Anmeldetag: 28.04.2004
(51) Int. Cl.: F16G 15/02

(54) **KETTENSCHLOSS**
CHAIN LOCK
JOINT DE CHAINE

(30) Priorität: 02.05.2003 DE 10320692
(43) Veröffentlichungstag der Anmeldung: 01.02.2006
(73) Patentinhaber: RUD Ketten Rieger & Dietz GmbH u. Co. KG, 73432 Aalen (DE)
(72) Erfinder: NUDING, Andreas, 73312 Geislingen (DE); LANG, Werner, 73463 Westhausen-Lippach (DE); DALFERTH, Hans, 73433 Aalen-Wasseralfingen (DE)
(74) Vertreter: Grünecker, Kinkeldey, Stockmair & Schwanhäusser Anwaltssozietät
(86) Internationale Anmeldenummer: PCT/DE2004/000921
(87) Internationale Veröffentlichungsnummer: WO 2004/097252

(56) Entgegenhaltungen:
- DE-A- 19 914 015
- DE-U- 8 320 392
- DE-U- 20 304 534
- DE-U- 29 811 332
- DE-U- 29 821 312
- FR-A- 2 333 170

## Beschreibung

### Technisches Gebiet

Die Erfindung betrifft ein Kettenschloss für Gliederketten mit zwei in Längsrichtung des Schlosses zum Öffnen und Schließen des Schlosses um begrenzte Beträge zueinander verschiebbaren Schlossteilen, die jeweils zwei über einen Längssteg miteinander verbundene Enden aufweisen, von denen jeweils eines einen Zapfen mit einem sich über einen Teil des Zapfenumfangs erstreckenden Haltesteg bildet und jeweils eines mit einer zur Aufnahme des Zapfen dienenden, eine Haltenut für den Haltesteg aufweisenden Tasche versehen ist.

### Stand der Technik

Kettenschlösser der vorstehenden Art sind aus der DE 23 54 028 C und der FR-A 2 333 170 bekannt. Die Haltestege seiner Zapfen haben ebenso wie die Haltenuten ihrer Taschen auf einem großen Teil ihrer Länge parallele Seitenwände. Entsprechendes gilt auch für die Haltestege und Haltenuten der Zapfen und Taschen zweier anderer aus der DE 298 21 312 U und der FR-A 2 333 170 bekannter Kettenschlösser, bei denen der Zapfen und die Tasche Endteile aufweisen, welche sich in Querrichtung zum Bügelinneren zunehmend verbreitern bzw. erweitern. Bei beiden bekannten Konstruktionen müssen die identisch ausgebildeten Schlossteile während der Montage und Demontage des Schlosses in Richtung der Längsachse des Schlosses um Beträge zueinander verschoben werden, die der Länge der parallelen Seitenwandabschnitte entsprechen und die aufgrund ihrer Größe das Öffnen und Schließen des Schlosses erschweren. Eine Verkürzung des Längsverschiebeweges wird bei einem aus der DE 199 14 015 C bekannten Kettenschloss dadurch erreicht, dass die Haltestege und die Haltenuten im Bereich ihrer parallelen Seitenwandabschnitte mit Zwischenräumen und Aussparungen versehen sind, die es gestatten, die Schlossteile in einer sich teilweise überdeckenden Zwischenposition durch eine senkrecht zur Längsachse des Schlosses gerichtete Bewegung zusammenzufügen, um sie anschließend längs eines relativ kurzen Verschiebeweges in Richtung der Längsachse des Schlosses zusammenzufügen. Auch das zuletzt beschriebene bekannte Kettenschloss besitzt Haltestege und Haltenuten mit parallelen Seitenwandabschnitten, die - wie die Erfahrung gezeigt hat - dann wie die zuvor beschriebenen Konstruktionen Probleme mit sich bringen, wenn das Kettenschloss nach längerer Einsatzzeit geöffnet werden soll. Verschmutzungen und Passungsrost zwischen den praktisch spielfrei ineinander greifenden Zapfen und Taschen führen nämlich regelmäßig zu einer Art Klebeverbindung zwischen den Zapfen und Taschen, deren Festigkeit primär durch die Größe der sich gegenüberliegenden parallelen Seitenwandabschnitte bestimmt wird. Verkürzte Längsverschiebewege ermöglicht auch ein in der DE 298 11 332 U offenbartes Kettenschloss, bei dem die Zapfen lediglich an ihren äußeren Enden mit extrem kurzen Haltestegen ausgestattet sind. Der Nachteil dieses Schlosses besteht darin, dass die von den kurzen Haltestegen aufzunehmenden Belastungen extrem hoch sind und vorzeitige Brüche des Schlosses begünstigen. Aus der DE 83 20 392 U ist schließlich ein Kettenschloss bekannt, das an den Enden eines bogenförmigen Steges zum Eingriff in Nuten von Taschen dienende Haltestege aufweist und bei dem der bogenförmige Steg des einen Schlossteiles in einen bogenförmigen Längsschlitz des anderen Schlossteiles passt. Es versteht sich, dass bei diesem Kettenschloss die geschilderte Problematik besonders stark zum Tragen kommt.

### Darstellung der Erfindung

Der Erfindung liegt die Aufgabe zugrunde, ohne Festigkeitseinbußen ein Kettenschloss der in Betracht gezogenen Art zu schaffen, bei dem nicht nur die zum Öffnen und Schließen des Schlosses erforderlichen Verschiebewege der Schlossteile wie beim Kettenschloss nach der DE 298 11 332 U vergleichsweise kurz sind und das sich daher auch nach längeren Einsatzzeiten leicht öffnen lässt. Gelöst wird die vorstehende Aufgabe auf überraschend einfache Weise erfindungsgemäß dadurch, dass der in der Tasche auf nehmbare Teil des Zapfens und die Tasche einen sich in Längsrichtung des Schlosses zum Schlossinneren durchgehend verbreiternden bzw. erweiternden Querschnitt aufweisen.

Versuche haben ergeben, dass sich im Sinne der Erfindung ausgebildete Kettenschlösser regelmäßig auch nach langem Gebrauch durch einen kurzen, auf eines der Schlossteile ausgeübten Hammerschlag öffnen lassen, nachdem gegebenenfalls vorhandene Sicherungselemente zuvor entfernt wurden, wobei der aufgezeigte Vorteil insbesondere dann zum Tragen kommt, wenn der Zapfen mehrere Haltestege und die Tasche mehrere Haltenuten aufweist.

Weitere Merkmale und Einzelheiten der Erfindung ergeben sich aus den Unteransprüchen und der nachstehenden Beschreibung einer in den beigefügten Zeichnungen dargestellten bevorzugten Ausführungsform.

### Kurze Beschreibung der Zeichnungen

Es zeigen:
- Fig.1: teilweise im Schnitt die Seitenansicht eines aus zwei identischen Schlossteilen bestehenden Kettenschlosses
- Fig. 2: die perspektivische Darstellung eines einzelnen Schlossteiles
- Fig. 3: eine Seitenansicht des Schlossteiles gemäß Fig. 2
- Fig. 4: einen Schnitt längs der Linie IV - IV in Fig. 3
- Fig. 5: die Draufsicht auf das Schlossteil gemäß Fig. 2 und 3
- Fig. 6: eine erste Seitenansicht der zu verbindenden Schlossteile und
- Fig. 7: eine zweite Seitenansicht der zu verbindenden Schlossteile

### Wege zur Ausführung der Erfindung

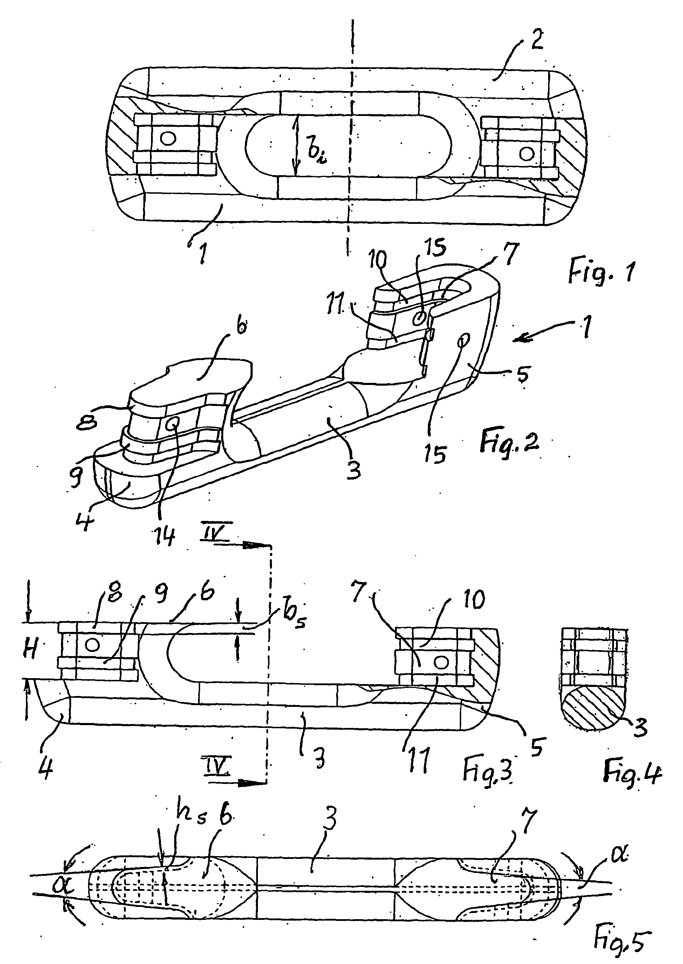

Fig. 1 zeigt ein aus zwei identisch ausgebildeten Schlossteilen 1 und 2 bestehendes Kettenschloss im geschlossenen Zustand. Einzelheiten des Aufbaus der Schlossteile 1 und 2 ergeben sich aus den Figuren 2 bis 5.

Jedes Schlossteil weist zwei über einen Längsschenkel 3 miteinander verbundene Enden 4 und 5 auf, von denen eines mit einem Zapfen 6 und eines mit einer zur Aufnahme des Zapfens 6 des jeweils anderen Schlossteiles dienenden Tasche 7 versehen ist. Der Zapfen 6 und die Tasche 7 haben eine Höhe H, die im wesentlichen gleich der inneren Breite bi des Kettenschlosses ist. Zwei am Zapfen 6 vorgesehenen Haltestegen 8 und 9 sind zwei an der Tasche 7 vorgesehene Haltenuten 10 und 11 zugeordnet. Wie am besten aus Fig. 5 erkennbar, weisen sowohl der Zapfen 6 als auch die Tasche 7 einen sich in Längsrichtung des Kettenschlosses zum Schlossinneren verbreiternden bzw. erweiternden Querschnitt auf, d. h. weder die Flanken der Haltestege 8, 9 noch die ihnen zugeordneten Seitenwandabschnitte der Haltenuten 10, 11 verlaufen parallel zueinander. Bei der in den Figuren dargestellten Ausführungsform sind die Flanken der Haltestege 8, 9 keilförmig, d. h. gerade ausgebildet und die ihnen zugeordneten Seitenwandabschnitte der Haltenuten 10, 11 bilden dem Keilwinkel a angepasste Schrägflächen. Der Winkel α sollte in der Größenordnung von 10 bis 30° liegen, bei der dargestellten Ausführungsform beträgt er etwa 15°.

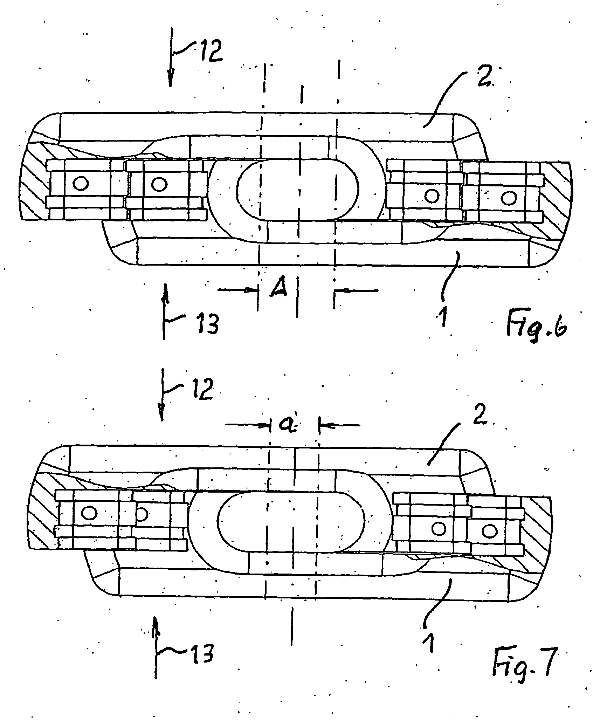

Wie anhand eines Vergleiches der Figuren 6 und 7 erkennbar, bestimmt die Größe des Winkels α den Mindestverschiebeweg der Schlossteile 1 und 2 in Richtung der Längsachse des Kettenschlosses. In Fig. 6 ist der Weg A dargestellt, um den die Schlossteile 1 und 2, nachdem sie in Richtung der Pfeile 12 und 13 zusammengefügt worden sind, in Richtung der Längsachse des Schlosses verschoben werden müssten, falls die Flanken der Haltestege 8, 9 und die Seitenwandabschnitte der Haltenuten 10, 11 parallel zueinander verlaufen würden. Fig. 7 zeigt, dass sich der Längsverschiebeweg aufgrund der keilförmigen Ausbildung der Flanken der Haltestege 8, 9 und der Schräge der Seitenwandabschnitte der Haltenuten 10, 11 auf einen Wert a verkürzen lässt, wobei die Verkürzung eine Erleichterung sowohl der Montage als auch der Demontage mit sich bringt. Lassen die jeweiligen Gegebenheiten auch eine bequeme Montage und Demontage des Schlosses bei Anwendung langer Verschiebewege der Schlossteile in Längsrichtung zu, d. h. kommt es nur darauf an, dass sich das Schloss nach langen Einsatzzeiten und starker Beanspruchung leicht öffnen lässt, kann der Winkel α auch kleinere Werte als 10° annehmen.

Im Zusammenhang mit der leichten Lösbarkeit der Schlossteile 1 und 2 voneinander kommt neben der für die Festigkeit maßgeblichen Breite bₛ der Haltestege 8, 9 auch deren Höhe hₛ Bedeutung zu. Sie sollte Werte von 3 bis 6 mm möglichst weder unter- noch überschreiten.

14 und 15 sind Querbohrungen zur Aufnahme von zylindrischen Sicherungselementen, die auch zur Kraftübertragung dienen.

## Patentansprüche

1. Kettenschloss für Gliederketten mit zwei in Längsrichtung des Schlosses zum Öffnen und Schließen des Schlosses um begrenzte Beträge zueinander verschiebbaren Schlossteilen (1, 2), die jeweils zwei über einen Längssteg (3) miteinander verbundene Enden aufweisen, von denen jeweils eines einen Zapfen (6) mit einem sich über einen Teil des Zapfenumfangs erstreckenden Haltesteg (8) bildet und eines mit einer zur Aufnahme des Zapfens (6) des jeweiligen anderen Schlossteils dienenden, eine Haltenut (10) für den Haltesteg (8) aufweisenden Tasche (7) versehen ist, **dadurch gekennzeichnet, dass** der in der Tasche (7) aufnehmbare Teil des Zapfens (6) und die Tasche (7) einen sich in Längsrichtung des Schlosses zum Schlossinneren durchgehend verbreiternden bzw. erweiternden Querschnitt aufweisen.

2. Kettenschloss nach Anspruch 1, **dadurch gekennzeichnet, dass** die Flanken der Haltestege (8, 9) keilförmig ausgebildet sind und die den Flanken der Haltestege (8, 9) zugewandten Seitenwandabschnitte der Haltenuten (10, 11) eine dem Keilwinkel (α) entsprechende Schräge aufweisen.

3. Kettenschloss nach Anspruch 2, **dadurch gekennzeichnet, dass** die Flanken der Haltestege (8, 9) des Zapfens (6) und die Seitenwände Haltenuten (10, 11) der Tasche (7) jeweils einen Winkel (α) von 10 bis 30° zwischen sich einschließen.

4. Kettenschloss nach einem der Ansprüche 1 bis 3, **dadurch gekennzeichnet, dass** die Höhe (hₛ) der Haltestege (8, 9) kleiner als ihre Breite (bₛ) ist.

5. Kettenschloss nach Anspruch 4, **dadurch gekennzeichnet, dass** die Höhe (hₛ) der Haltestege (8, 9) mindestens 3 mm beträgt.

6. Kettenschloss nach Anspruch 4, **dadurch gekennzeichnet, dass** die Höhe (hₛ) der Haltestege (8, 9) maximal 6 mm beträgt.

7. Kettenschloss nach einem der Ansprüche 1 bis 6, **dadurch gekennzeichnet, dass** die Höhe (H) des Zapfens (6) und der Tasche (7) im wesentlichen gleich der inneren Breite (bᵢ) des Schlosses ist und dass der Zapfen (6) mehrere Haltestege (8, 9) und die Tasche (7) mehrere Haltenuten (10, 11) aufweist.

8. Kettenschloss nach Anspruch 7, **dadurch gekennzeichnet, dass** der Zapfen (6) zwei Haltestege (8, 9) und die Tasche (7) zwei Haltenuten (10, 11) aufweist.

9. Kettenschloss nach Anspruch 7 oder 8, **dadurch gekennzeichnet, dass** der Zapfen (6) und die Tasche (7) mit zur Aufnahme eines auch zur Kraftübertragung nutzbaren Sicherungselements dienenden Querbohrungen (14, 15) versehen sind.

## Claims

1. Chain lock for link chains with two lock parts (1, 2) that can be moved to one another in the longitudinal direction of the lock to open and close the lock by limited amounts, which each have two ends connected to one another via a longitudinal bar (3), of which in each case one forms a stud (6) with a retaining web (8) extending over part of the circumference of the stud and one is provided with a pocket (7) serving to receive the stud (6) of in each case the other lock part and having a retaining groove (10) for the retaining web (8), **characterised in that** the part of the stud (6) that can be received in the pocket (7) and the pocket (7) have a cross-section continuously widening or extending in the longitudinal direction of the lock to the inside of the lock.

2. Chain lock according to claim 1, **characterised in that** the flanks of the retaining webs (8, 9) are wedge-shaped and the side wall sections of the retaining grooves (10, 11) facing the flanks of the retaining webs (8, 9) have a bevel corresponding to the wedge angle (α).

3. Chain lock according to claim 2, **characterised in that** the flanks of the retaining webs (8, 9) of the stud (6) and the side walls *[of the]* retaining grooves (10, 11) of the pocket (7) in each case enclose an angle (α) of 10 to 30° between them.

4. Chain lock according to one of claims 1 to 3, **characterised in that** the height (hₛ) of the retaining webs (8, 9) is smaller than its width (bₛ).

5. Chain lock according to claim 4, **characterised in that** the height (hₛ) of the retaining webs (8, 9) is at least 3 mm.

6. Chain lock according to claim 4, **characterised in that** the height (hₛ) of the retaining webs (8, 9) is at maximum 6 mm.

7. Chain lock according to one of claims 1 to 6, **characterised in that** the height (H) of the stud (6) and the pocket (7) is substantially the same as the inner width (bᵢ) of the lock and that the stud (6) has a plurality of retaining webs (8, 9) and the pocket (7) a plurality of retaining grooves (10, 11).

8. Chain lock according to claim 7, **characterised in that** the stud (6) has two retaining webs (8, 9) and the pocket (7) two retaining grooves (10, 11).

9. Chain lock according to claim 7 or 8, **characterised in that** the stud (6) and the pocket (7) are provided with cross holes (14, 15) serving to receive a safety element that can also be used for power transmission.

## Revendications

1. Joint de chaîne pour chaînes à maillons, avec deux éléments de joint (1, 2) qui sont aptes à coulisser l'un par rapport à l'autre, suivant des valeurs limitées, dans le sens longitudinal du joint pour ouvrir et fermer celui-ci, et qui comportent chacun deux extrémités reliées par une branche longitudinale (3), l'une formant un tenon (6) avec un rebord de fixation (8) qui s'étend sur une partie de la circonférence du tenon, tandis que l'autre est pourvue d'une cavité (7) qui sert à recevoir le tenon (6) de l'autre élément de serrure et qui présente une rainure de fixation (10) pour le rebord de fixation (8), **caractérisé en ce que** la partie du tenon (6) apte à être reçue dans la cavité (7) et ladite cavité (7) présentent une section transversale qui s'élargit ou s'évase de manière continue dans le sens longitudinal du joint vers l'intérieur de celui-ci.

2. Joint de chaîne selon la revendication 1, **caractérisé en ce que** les flancs des rebords de fixation (8, 9) sont cunéiformes, et les parties de paroi latérale des rainures de fixation (10, 11) tournées vers les flancs des rebords de fixation (8, 9) présentent un biseau qui correspond à l'angle de coin (α).

3. Joint de chaîne selon la revendication 2, **caractérisé en ce que** les flancs des rebords de fixation (8, 9) du tenon (6) et les parois latérales des rainures de fixation (10, 11) de la cavité (7) définissent un angle (α) de 10 à 30°.

4. Joint de chaîne selon l'une des revendications 1 à 3, **caractérisé en ce que** la hauteur (h₅) des rebords de fixation (8, 9) est inférieure à leur largeur (b₅).

5. Joint de chaîne selon la revendication 4, **caractérisé en ce que** la hauteur (h₅) des rebords de fixation (8, 9) est d'au moins 3 mm.

6. Joint de chaîne selon la revendication 4, **caractérisé en ce que** la hauteur (h₅) des rebords de fixation (8, 9) est au maximum de 6 mm.

7. Joint de chaîne selon l'une des revendications 1 à 6, **caractérisé en ce que** la hauteur (H) du tenon (6) et de la cavité (7) est globalement égale à la largeur intérieure (bᵢ) du joint, et **en ce que** le tenon (6) présente plusieurs rebords de fixation (8, 9), et la cavité (7) présente plusieurs rainures de fixation (10, 11).

8. Joint de chaîne selon la revendication 7, **caractérisé en ce que** la cheville (6) comporte deux rebords de fixation (8, 9), et la cavité (7) présente deux rainures de fixation (10, 11).

9. Joint de chaîne selon la revendication 7 ou 8, **caractérisé en ce que** le tenon (6) et la cavité (7) sont pourvus de perçages transversaux (14, 15) qui servent à recevoir un élément de blocage utilisable aussi pour la transmission de forces.
